## Europäisches Patentamt
## European Patent Office
## Office européen des brevets

(11) Veröffentlichungsnummer: **0 099 986**
**B1**

(12) # EUROPÄISCHE PATENTSCHRIFT

(45) Veröffentlichungstag der Patentschrift:
04.11.87

(21) Anmeldenummer: 83106084.3

(22) Anmeldetag: 22.06.83

(51) Int. Cl.⁴: **C 03 B 9/197**, C 03 B 9/195, C 03 B 9/36, C 03 B 9/193

(54) Verfahren und Vorrichtung zur Verformung eines Glastropfens zu einem Külbel.

(30) Priorität: 24.07.82 DE 3227774

(43) Veröffentlichungstag der Anmeldung:
08.02.84 Patentblatt 84/6

(45) Bekanntmachung des Hinweises auf die Patenterteilung:
04.11.87 Patentblatt 87/45

(84) Benannte Vertragsstaaten:
AT BE CH FR GB IT LI NL SE

(56) Entgegenhaltungen:
EP-A-0 027 830
DE-C-193 418
DE-C-627 815
US-A-1 527 947
US-A-2 289 046
US-A-4 009 016
US-A-4 200 447
US-A-4 273 568

Die Akte enthält technische Angaben, die nach
dem Eingang der Anmeldung eingereicht wurden
und die nicht in dieser Patentschrift enthalten sind.

(73) Patentinhaber: EMHART ZÜRICH S.A.,
Seefeldstrasse 224, Zürich (CH)

(72) Erfinder: Knoth, Werner- Dieter, Byfangerstrasse
175, D-4300 Essen 15 (DE)
Erfinder: Hüllen, Helmut, Dreilindenstrasse 93,
D-4300 Essen 1 (DE)
Erfinder: Hübner, Jochen, Flöttestrasse 46, D-4250
Bottrop- Welheim (DE)
Erfinder: Nebelung, Hermann, Baseler Strasse 29,
CH- 8048 Zürich (CH)

(74) Vertreter: Drury, Peter Lawrence, Emhart Patents
Department Lyn House 39 The Parade, Oadby,
Leicester LE2 5BB (GB)

## Beschreibung

Die Erfindung betrifft ein Verfahren nach dem Oberbegriff des Anspruchs 1 und eine Vorrichtung nach dem Oberbegriff des Anspruchs 3. Beide dienen zur Verformung eines Glastropfens zu einem Külbel als Zwischenprodukt zur Weiterverarbeitung in einer Fertigform einer Maschine zur Herstellung von Hohlglasartikeln, wobei die abgeteilten Glastropfen auf einen oder mehrere Preßpegel fallen, welcher bzw. welche den bzw. die frei aufliegenden Glastropfen in je eine Kombination eines Mündungs- und Bodenwerkzeuges verpreßt bzw. verpressen, von denen das bzw. die Bodenswerkzeuge im Anschluß an das Verpressen entfernt wird bzw. werden.

Ein Verfahren sowie eine Vorrichtung der eingangs genannten Art ist bekannt durch die US-A-2 289 046. Bei diesem bekannten Herstellungsverfahren wird der auf einem Preßpegel aufliegende Glastropfen in die Kombination eines Mündungs- und Bodenwerkzeuges gepreßt, woraufhin das Bodenwerkzeug entfernt und der Preßling mittels des Mündungswerkzeuges um 180 Grad verschwenkt und in die Fertigform zur endgültigen Ausformung übergeben wird.

Durch die US-A-4 273 568 ist ein Verfahren zur Herstellung von Hohlglasartikeln bekannt, bei welchem ein Glastropfen in eine Vorform fällt, auf die ein Mündungswerkzeug mit einem Preßpegel aufgesetzt wird. Nach Entfernen der Vorform sowie des Preßpegels wird auf den Mündungsring ein Blaskopf aufgesetzt und der vorgepreßte Glastropfen vorgeblasen. Unter der Einwirkung der Schwerkraft längt sich der Vorformling und wird dann in die Fertigform eingesetzt, in der das endgültige Ausformen durchgeführt wird.

Im engeren bezieht sich die Erfindung auf die Herstellung von Hohlglas in sog. IS- oder RIS-Maschinen. Deren Arbeitsweise zeichnet sich dadurch aus, daß die Verformungsvorgänge zur Herstellung von fertigen Hohlglasartikeln in Stationen stattfinden, die in diesen Maschinen linear in einer Reihe angeordnet sind. Bei den IS-Maschinen ist dabei das Verhältnis der Zahl der Vorformen zu den Fertigformen in den beiden Verformungsschritten 1 : 1, bei den RIS-Maschinen 1 : 2 oder höher; darüber hinaus sind bei letzterem Maschinentyp die Fertigformen in jeder Station einzeln drehbar angeordnet. Der Nachteil der IS-Maschine besteht darin, daß die Herstellung besonders dünnwandiger Hohlglasartikel nicht möglich ist bei gleichzeitiger Steigerung der Produktionsgeschwindigkeit. In der herkömmlichen Ausbildung der Vorformen, die dieser Maschinentyp verwendet, ist eine Külbelausbildung, die in der Fertigform beim Ausblasen zu der erwünschten Dünnwandigkeit des Hohlglases führen soll, nicht erreichbar. Bei den meisten Artikelausbildungen erstarrt das Glas zu schnell oder aber es führt zu einer äußerst unterschiedlichen Glasverteilung infolge des geringen Wärmevorrates in den Wandungen des Hohlglases. Für eine Nutzung der Wiedererwärmung aus dem Inneren der Glaswandungen heraus steht sowohl bei der einen als auch bei der anderen Maschinengattung zu wenig Verarbeitungszeit zur Verfügung.

Von diesem Stand der Technik ausgehend liegt der Erfindung die Aufgabe zugrunde, die Herstellung besonders dünnwandiger Glashohlkörper in den bekannten IS- und RIS-Maschinen zu ermöglichen, wobei überdies eine vergleichsweise hohe Produktionsgeschwindigkeit erreicht werden soll.

Nach dem Vorschlage der Erfinung wird dies verfahrensgemäß dadurch erreicht, daß, bei einem Verfahren der eingangs genannten Art, der auf dem Preßpegel aufliegende Glastropfen derart verpreßt wird, daß der verpreßte Glastropfen in der Mitte eine größere Dicke aufweist als an seinen Rändern und der verpreßte Glastropfen von unten zu einem nach oben gewölbten Külbel vorgeblasen wird. Auf diese Weise wird erreicht, daß der verpreßte Glastropfen sich beim Vorblasen in der Mitte stärker ausdehnt als an den Rändern. Das verpreßte und vorgeblasene Külbel wird durch Überschwenken um 180 Grad in eine Fertigform eingesetzt, in welcher der Hohlglasartikel durch Ausblasen oder Saugen des Külbels seine endgültige Form erhält.

Der Grundgedanke der Erfindung besteht darin, daß die herkömmlichen Vorform-Konstruktionen geändert werden und lediglich die preßpegel mit Böden und Mündungen verwendet werden, wobei die abgeteilten Glastropfen frei auf den Preßpegeln aufliegen.

Das Külbel kann in der Fertigform eine Zusatzbeheizung erfahren.

Somit ist es möglich, Hohlglasartikel herzustellen, deren Wanddicken unter 1,2 mm betragen.

Vorrichtungsgemäß wird die der Erfindung zugrundeliegende Aufgabe dadurch gelöst, daß, bei einer Vorrichtung der eingangs genannten Art, der Preßpegel eine nach außen gewölbte Oberseite und das Bodenwerkzeug einen vergrößerten Vorformboden aufweisen, und Mittel vorgesehen sind zum Vorblasen des verpreßten Glastropfens von unten zu einem nach oben gewölbten Külbel. Der Preßpegel ist in bekannter Weise je in einer zylindrischen Hülse auf- und abbewegbar, auf dessen oberer Stirnseite das kombinierte Werkzeug für das Ausformen des Külbels angeordnet ist.

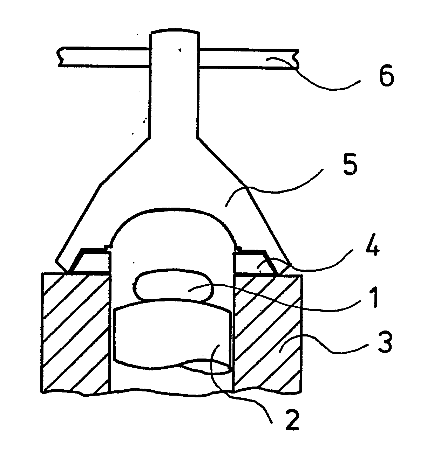

Ein Ausführungsbeispiel der Erfindung ist an Hand der Zeichnung näher erläutert, und zwar zeigt diese in schematischer Darstellung eine teilweise geschnittene Ansicht des oberen Bereiches einer Hülse mit Preßpegel und kombiniertem Werkzeug.

Anstelle der herkömmlichen Vorformen findet nach der Lehre der Erfindung ein Preßpegel 2 Verwendung, welcher in der zylindrischen Hülse 3 auf- und abbewegbar ist. Der abgeteilte Glastropfen 1 fällt auf die nach außen gewölbte Oberseite des Preßpegels 2 und wird von diesem frei getragen. Dies stellt den ersten Verfahrensschritt dar.

Im zweiten Verfahrensschritt wird von der Seite her unmittelbar ein vergrößerter Vorformboden 5 eingeschwenkt und direkt mit dem Mündungswerkzeug 4 verbunden, welches auf der oberen Stirnseite der Hülse 3 aufsitzt. Mündungswerkzeug 4 und Bodenwerkzeug 5 stellen ein kombiniertes Werkzeug dar, wobei die einzelnen Teile jedoch getrennt voneinander steuerbar sind.

Durch Aufwärtsbewegen des Preßpegels 2 wird der Tropfen 3 in dem kombinierten Mündungs- 4 und Bodenwerkzeug 5 verpreßt. Daraufhin schwenkt das Bodenwerkzeug 5 zurück, so daß durch Blasen von unten, vorzugsweise durch die den Preßpegel 2 umgebende Hülse 3, der verpreßte Glastropfen zu einem, Külbel vorgeblasen wird. Nachdem dieses hergestellt ist, erfolgt das Schwenken des Külbels um 180 Grad in eine nicht weiter dargestellte Fertigform an sich bekannter Ausführung, die sich danach schließt. Je nach Külbelart wird in der Fertigform mit oder ohne zusätzliche Beheizung das Külbel in seine endgültige Form gebracht, und zwar durch Blasen und/oder Saugen. Nach Öffnen der Fertigform kann der fertiggestellte Artikel entnommen werden.

Das erfindungsgemäße Verfahren kann bevorzugt zur Herstellung von sog. Weitmundartikeln Verwendung finden, weil bei diesen das Problem der Mündungshalterung besonders wichtig ist und durch die erfindungsgemäße Ausführung eine sichere und auch größeren Verformungsgraden standhaltende Lösung gefunden worden ist.

Die Einfachheit der Vorrichtung und die geringen zurückzulegenden Wege des Glases vom Tropfen bis zum fertigen Artikel ist besonders geeignet für hohe Produktionsgeschwindigkeiten, wobei die Nutzbarmachung des RIS-Maschinenprinzips mit mehreren Fertigformen als zugehörigen Vorformen die Erzielung hoher Produktionsgeschwindigkeiten unterstützt, weil in diesem Bereich bei IS-Maschinen der Produktionsengpaß liegt.

Die erfindungsgemäße Verformungstechnologie eignet sich hervorragend für hohe Glasbehälter mit einer Wanddicke von vorzugsweise unter 1,0 mm.

### Patentansprüche

1. Verfahren zur Verformung eines Glastropfens zu einem Külbel als Zwischenprodukt zur Weiterverarbeitung in einer Fertigform einer Maschine zur Herstellung von Hohlglasartikeln, wobei die abgeteilten Glastropfen (1) auf einen oder mehrere Preßpegel (2) fallen, welcher bzw. welche den bzw. die frei aufliegenden Glastropfen (1) in je eine Kombination eines Mündungs- (4) und Bodenwerkzeuges (5) verpreßt bzw. verpressen, von denen das bzw. die Bodenwerkzeuge (5) im Anschluß an das Verpressen entfernt wird bzw. werden, dadurch gekennzeichnet, daß der auf dem Preßpegel (2) aufliegende Glastropfen (1) derart verpreßt wird, daß der verpreßte Glastropfen in der Mitte eine größere Dicke aufweist als an seinen Rändern und der verpreßte Glastropfen (1) von unten zu einem nach oben gewölbten Külbel vorgeblasen wird.

2. Verfahren nach Anspruch 1, dadurch gekennzeichnet, daß das Külbel in der Fertigform eine Zusatzbeheizung erfährt.

3. Vorrichtung zur Verformung eines Glastropfens zu einem Külbel als Zwischenprodukt zur Weiterverarbeitung in einer Fertigform einer Maschine zur Herstellung von Hohlglasartikeln, welche Vorrichtung einen oder mehrere Preßpegel (2) aufweist, auf welche(n) die abgeteilten Glastropfen (1) fallen, und bei der für jeden Preßpegel eine Kombination eines Mündungs- (4) und Bodenwerkzeuges (5) vorgesehen ist, in welcher die frei aufliegenden Glastropfen (1) verpreßt werden, wobei das Mündungs- (4) und das Bodenwerkzeug (5) getrennt steuerbar sind, dadurch gekennzeichnet, daß der Preßpegel (2) eine nach außen gewölbte Oberseite und das Bodenwerkzeug (5) einen vergrößerten Vorformboden aufweisen, und Mittel vorgesehen sind zum Vorblasen des verpreßten Glastropfens von unten zu einem nach oben gewölbten Külbel.

4. Vorrichtung nach Anspruch 3, dadurch gekennzeichnet, daß der Preßpegel (2) in einer zylindrischen Hülse (3) od.dgl. auf- und abbewegbar ist, auf dessen oberer Stirnseite das kombinierte Werkzeug (4, 5) angeordnet ist.

### Claims

1. Process for shaping a glass gob into a parison as intermediate product for further processing in a finish mould of a machine for the manufacture of hollow glass articles, wherein the split-off glass gobs (1) fall on to one or more pressing plungers (2) the or each of which presses or press the or each freely-lying glass gob (1) into a respective combination of a mouth tool (4) and a bottom tool (5), from which gob the or each bottom tool (5) is removed following the pressing, characterised in that the glass gob (1) lying on the pressing plunger (2) is pressed in such a manner that the pressed glass gob has a greater thickness in the middle than at its edges and the pressed glass gob (1) is blown preliminarily from beneath into an upwardly vaulted parison.

2. Process according to Claim 1, characterised in that the parison experiences an additional heating in the finish mould.

3. Apparatus for shaping a glass gob into a parison as intermediate product for further processing in a finish mould which apparatus has one or more pressing plungers (2) on to which the split-off glass gobs (1) fall and in which for each pressing plunger a combination of a mouth tool (4) and bottom tool (5) is provided in which the freely-lying glass gobs (1) are pressed, wherein the mouth tool (4) and bottom tool (5) are controllably separated, characterised in that the pressing plunger (2) has an outwardly vaulted upper side and the bottom tool (5) has an enlarged preliminary-shaping bottom, and means are provided for preliminary blowing of the pressed glass gob from beneath into an upwardly-vaulted parison.

4. Apparatus according to Claim 3, characterised in that the pressing plunger (2) is movable up and down in a cylindrical sleeve (3) or the like, on whose upwardly-facing side the combined tool (4, 5) is arranged.

## Revendications

1. Procédé de déformation d'une goutte de verre sous la forme d'une paraison servant de produit intermédiaire en vue d'un façonnage ultérieur dans un moule de finiton d'une machine de fabrication d'objets creux en verre, selon lequel les gouttes de verre (1) séparées tombent sur un ou plusieurs plongeurs de presse (2) a l'aide duquel ou desquels les gouttes de verre (1) qui repose(nt) à l'état libre est (sont) comprimée(s) chacune dans la combinaison d'un outil d'embouchure (4) et d'un outil de fond (5), combinaison dont le ou les outil(s) de fond (5) est ou sont éloigné(s) à la suite de la compression, caractérisé en ce qu'on comprime la goutte de verre (1) reposant sur le plongeur de presse (2) de facon que la goutte de verre comprimée présente une épaisseur plus forte au milieu que sur ses bords et en ce qu'on procède par dessous au soufflage préalable de cette goutte de verre comprimée (1) de façon à donner une paraison bombée vers le haut.

2. Procédé selon la revendication 1, caractérisé en ce qu'on soumet à un chauffage supplémentaire la paraison a l'état fini.

3. Dispositif de déformation d'une goutte de verre sous forme d'une paraison servant de produit intermédiaire en vue d'un façonnage ultérieur dans un moule de finition d'une machine de fabrication d'objets creux en verre, ce dispositif comportant un ou plusieurs plongeurs de presse (2) sur lequel ou lesquels tombent les gouttes de verre séparées, tandis qu'il est prévu dans ce dispositif, pour chaque plongeur de presse, la combinaison d'un outil d'embouchure (4) et d'un outil de fond (5) dans laquelle les gouttes de verre (1) qui reposent librement sont comprimées, les outils d'embouchure (4) et de fond (5) pouvant être commandés séparément, caractérisé en ce que le plongeur de presse (2) comporte une face supérieure bombée vers l'extérieur et l'outil de fond (5) présente un fond de préformage de plus grande dimension, et en ce qu'il est prévu des moyens pour le soufflage préalable, par-dessous, de la goutte de verre comprimée de façon à donner une paraison bombée vers le haut.

4. Dispositif selon la revendication 1, caractérisé en ce que le plongeur de presse (2) peut être animé d'un mouvement alternatif vers le haut et vers le bas dans un manchon cylindrique (3) ou analogue sur la face frontale supérieure duquel est disposé l'outil combiné (4, 5).